**Europäisches Patentamt**

**European Patent Office**

**Office européen des brevets**

(19)

(11) Veröffentlichungsnummer: **0 130 968**
**B1**

(12)

# EUROPÄISCHE PATENTSCHRIFT

(45) Veröffentlichungstag der Patentschrift:
**16.09.87**

(51) Int. Cl.⁴: **G 01 M 15/00**

(21) Anmeldenummer: **84890099.9**

(22) Anmeldetag: **29.05.84**

(54) **Einrichtung zur Prüfung einer Brennkraftmaschine.**

(30) Priorität: **03.06.83 AT 2050/83**

(43) Veröffentlichungstag der Anmeldung:
**09.01.85 Patentblatt 85/2**

(45) Bekanntmachung des Hinweises auf die Patenterteilung:
**16.09.87 Patentblatt 87/38**

(84) Benannte Vertragsstaaten:
**DE FR IT**

(56) Entgegenhaltungen:
**DE - A - 3 004 605**
**DE - A - 3 031 531**
**DE - A - 3 120 037**
**US - A - 3 589 815**

(73) Patentinhaber: **AVL GESELLSCHAFT FÜR VERBRENNUNGSKRAFTMASCHINEN UND MESSTECHNIK MBH.PROF.DR.DR.H.C.HANS LIST, Kleiststrasse 48, A-8020 Graz (AT)**

(72) Erfinder: **Kunzfeld, Wilhelm, Stiftingtalstrasse 71, A-8010 Graz (AT)**
Erfinder: **Schiffbänker, Herbert, Dipl. Ing., Dr. Robert Graf Strasse 64/10, A-8010 Graz (AT)**
Erfinder: **List, Helmut, Dipl.-Ing., Bogengasse 36, A-8010 Graz (AT)**

(74) Vertreter: **Krause, Walter, Dr. Dipl.-Ing., Postfach 200 Singerstrasse 8, A-1014 Wien (AT)**

## Beschreibung

Die Erfindung betrifft eine Einrichtung zur Prüfung auf sich in einer Änderung des Vibrationsverhaltens ausdrückende Fehler und Betriebsstörungen, mit einer zumindest teilweise fertig montierten und zum Zwecke dieser Prüfung fremdangetriebenen Brennkraftmaschine einer Schwingungsaufnahmeeinrichtung sowie einer damit in Verbindung stehenden Auswerteeinheit.

Bekannte derartige Einrichtungen weisen zumeist einfach eine Aufnahmevorrichtung für die zu prüfende Brennkraftmaschine mit den für den Fremdantrieb erforderlichen Anschlüssen auf, welche in einem schalltoten oder zumindest gegenüber Umgebungsgeräuschen weitgehend isolierten Raum angeordnet ist. Die zu prüfende Brennkraftmaschine wird vom jeweiligen Prüfer nach Gehör beurteilt – was naturgemäss, auch wegen der sehr grossen Anzahl von den ausgesandten Schallpegel beeinflussenden Parametern, nur eine sehr grobe und subjektive Prüfung beispielsweise auf korrekt eingestellte Ventile, Vorhandensein aller Lagerschalen, oder dgl. erlaubt.

Schliesslich ist es in ähnlichem Zusammenhang auch bekannt, aus an geeigneten Stellen der Brennkraftmaschine abgenommenen Körperschallsignalen auf eine korrekte Einstellung des Ventiltriebes – also etwa der Ventilspiele oder der Ventilsteuerzeiten – zu schliessen, wobei allerdings die in diesem Zusammenhang bekannte Einrichtung (siehe DE-OS 30 04 605) nicht an einer fremdangetriebenen sondern an einer im Normalbetrieb befindlichen Brennkraftmaschine angewandt ist, was wegen der dabei naturgemäss dominierenden Verbrennungsgeräusche keine besondere Genauigkeit der Messung erwarten lässt. Als weiterer Nachteil wäre in diesem Zusammenhang zu nennen, dass die üblicherweise für derartige Zwecke verwendeten Körperschallaufnehmer entweder auf der zu vermessenden Brennkraftmaschine fest angebracht werden müssen – also etwa in geeigneten Bohrungen eingeschraubt oder an bestimmten Stellen der Brennkraftmaschine aufgeklebt – oder aber, falls diese feste Befestigung nicht gesichert ist – Resultate liefern, welche in höchstem Masse von der gewählten Anbringung abhängig sind. So treten beispielsweise bei elastischen Andrückvorrichtungen, wie diese an sich zur Durchführung von automatischen Serienmessungen sehr günstig wären, starke Beeinflussungen der aufgenommenen Schwingungen durch das Eigenschwingungsverhalten des Gebers bzw. der Andrückvorrichtung auf, welche eine sinnvolle Messung nur in einem sehr schmalen Frequenzband ermöglichen.

Aufgabe der vorliegenden Erfindung ist es, eine Einrichtung der eingangs genannten Art so zu verbessern, dass die genannten Nachteile der bekannten Einrichtungen nicht auftreten, und dass insbesondere die Prüfung einer fremdangetriebenen Brennkraftmaschine auf sich in einer Änderung des Vibrationsverhaltens ausdrückende Fehler bzw. Betriebsstörungen auf einfache und aussagekräftige Weise in einem nicht durch die Messung selbst begrenzten Frequenzgebiet der auftretenden Vibrationen möglich ist. Weiters soll diese Prüfung schnell und ohne Vorbereitungsarbeiten an der Brennkraftmaschine durchführen zu müssen möglich sein, um die Anwendung beispielsweise in der Endkontrolle von Serienbrennkraftmaschinen zu gestatten.

Dies wird gemäss der vorliegenden Erfindung dadurch erreicht, dass zur Messung von Oberflächenvibrationen in an sich bekannter Weise die Schwingungsaufnahmeeinrichtung zumindest einen Laser, dessen Strahl auf die zu vermessenden Stellen der Oberflächen der Brennkraftmaschine richtbar ist, sowie einen Empfänger für die von der Brennkraftmaschine reflektierte Strahlung aufweist, und in der Auswerteeinheit eine Demodulationseinrichtung vorgesehen ist, welche aus der von der zu vermessenden Stelle reflektierten Laserstrahlung den Einfluss von Vibrationen der reflektierenden Oberfläche ausfiltert und als Messignal weiterverarbeitet, und dass eine mit einer Verstelleinrichtung zusammenwirkende Steuereinheit vorgesehen ist, welche Laser und Empfänger auf die jeweils zu vermessende Stelle der Oberfläche der Brennkraftmaschine ausrichtet.

Die Aufnahme von Schwingungen reflektierender Oberflächen in Richtung eines einfallenden Laserstrahles durch Messung des reflektierten Strahles und Vergleich von dessen Parametern mit den entsprechenden Parametern des einfallenden Strahles ist in zwei prinzipiellen Varianten möglich und gehört zum Stande der Technik. Die erste Variante ist die sogenannte Interferenzmessung, bei der im wesentlichen die unterschiedliche Phasenlage des auftreffenden und des reflektierten Strahles bzw. die sich bei einer Überlagerung demgemäss ergebenden Interferenzmuster für die Messung ausgenutzt werden; die zweite Variante arbeitet unter Ausnutzung des Doppler-Effekts, also mit einer Bestimmung der Frequenzverschiebung des reflektierten Strahles gegenüber dem auftreffenden Strahl, die sich aus der Bewegung der reflektierenden Oberfläche ergibt. Insbesonders für die zweitgenannte Methode sind in letzter Zeit Verfahren und elektronische Einrichtungen bekannt geworden, welche eine sehr genaue und mit den tatsächlichen Verhältnissen an der schwingenden Oberfläche sehr gut übereinstimmende Schwingungsanalyse erlauben. Es sei in diesem Zusammenhang nur auf den Artikel: Laser Doppler Vibration Measurements Using Variable Frequency Shift, von P. Buchhave, in DISA-Information, 18. Sept. 1975 verwiesen, der die Schwingungsaufnahme nach der zweitgenannten Methode behandelt.

Durch die Verwendung der genannten Schwingungsaufnahmeeinrichtung in der Einrichtung nach der vorliegenden Erfindung ist also die berührungslose Messung von Oberflächenvibrationen an beliebigen Stellen der Oberfläche der zu prüfenden Brennkraftmaschine möglich, was insbesonders im Zusammenhang mit der über eine Verstelleinrichtung auf die relative Ausrichtung des Laserstrahls einwirkenden Steuereinheit die automatische Prüfung ermöglicht. Die Schwingungsaufnahmeeinrichtung ist dabei an relativ beliebiger Stelle in der Umgebung der Brennkraftmaschine angebracht, wobei lediglich darauf zu achten ist, dass alle interessierenden Stellen für die Abnahme der Oberflächenvibrationen direkt für den Laserstrahl zugänglich sind und keine zu starke Neigung gegenüber dem einfallenden Strahl haben. Der letztgenannte Umstand ist deswegen bedeutsam, da – wie bereits angedeutet – mit einer derartigen Anordnung nur Schwingungen in Richtung des einfallenden Laserstrahls aufgenommen werden können, was bei schrägem Einfall nur die Bestimmung der in Richtung des einfallenden Strahles liegenden Komponente erlaubt.

In diesem Zusammenhang ist es besonders vorteilhaft, wenn gemäss einer weiteren Ausgestaltung der Erfindung die Schwingungsaufnahmeeinrichtung auf einem relativ zur zu vermessenden Oberfläche verschiebbaren Messschlitten kardanisch beweglich gelagert ist, und wenn am Messschlitten Verstellelemente vorgesehen sind, welche mit der Steuereinheit in Verbindung stehen. Auf diese Weise können beliebige Punkte an der Brennkraftmaschine optimal, das heisst möglichst senkrecht zur Oberfläche, angestrahlt werden, was eine sehr gute Signalausbeute ergibt.

Gemäss einer anderen Ausbildung der Erfindung können sowohl Laser als auch Empfänger relativ zur zu vermessenden Oberfläche feststehend angeordnet sein, wobei im Strahlengang der ausgesandten sowie der reflektierten Strahlung Ablenkeinrichtungen angeordnet sind, welche über mit der Steuereinrichtung in Verbindung stehende Verstelleinrichtungen verschwenkbar sind. Da die für die Zwecke der vorliegenden Erfindung bevorzugt einsetzbaren Laser doch relativ gross und dementsprechend schwer sind, ergibt diese Ausgestaltung, die die Verstellung lediglich einiger Ablenkeinrichtungen – wie Spiegel, Prismas od. dgl. – erfordert, was einfacher, schneller und präziser zu bewerkstelligen ist als die Verschwenkung der gesamten Schwingungsaufnahmeeinrichtung, einige Vorteile.

Dabei ist von Vorteil, wenn gemäss einer Weiterbildung der Erfindung die Länge des Strahlenganges, bei für die verschiedenen zu vermessenden Stellen der Oberfläche der Brennkraftmaschine verschiedenen Entfernungen zwischen Laser bzw. Empfänger und zu vermessender Oberfläche, über im Strahlengang angeordnete Kompensationsglieder verstellbar ist, wobei die Kompensationsglieder über mit der Steuereinheit in Verbindung stehende Stellglieder betätigbar sind. Da die Austrittsoptik des Lasers bzw. die vom reflektierten Strahl zu durchsetzende Optik zum Empfänger – diese müssen nicht notwendigerweise ident sein – auf eine bestimmte Entfernung zur reflektierenden Oberfläche in relativ engen Grenzen (etwa im Bereich einiger cm) eingestellt sein müssen, erfordert die Vermessung von in verschiedenen Entfernungen liegenden Punkten an der Brennkraftmaschine – sofern der zulässige Toleranzbereich überschritten wird – eine Berücksichtigung im Strahlengang, was über die genannten Kompensationsglieder (beispielsweise verschiebbare Prismen, die verschiedene zusätzliche Strahlenwege in ihrer Länge variieren) auf einfache Weise möglich ist.

In diesem Zusammenhang ist nach einer anderen Weiterbildung der Erfindung in der Auswerteeinheit eine an sich bekannte, den ausgesandten und den empfangenen Laserstrahl verwendende Entfernungsmesseinrichtung für die bis zur zu vermessenden Oberfläche zurückzulegende Strecke vorgesehen, welche mit einer Servo-Einrichtung zur Verstellung eines Objektivs für den Laserstrahl in Verbindung steht. Damit können die obengenannten Verhältnisse ebenfalls sehr genau berücksichtigt werden.

Nach einer anderen Ausgestaltung der Erfindung ist ein Messkopf vorgesehen, der auf einem relativ zur zu vermessenden Oberfläche verschiebbaren Messschlitten kardanisch beweglich gelagert ist, wobei an diesem Messschlitten Verstellelemente vorgesehen sind, welche mit der Steuereinheit in Verbindung stehen und wobei der Messkopf über zumindest einen flexiblen Lichtleiter mit dem feststehend angeordneten Laser und Empfänger in Verbindung steht. Auf diese Weise braucht lediglich der die Austrittsöffnung für den zugeführten Laserstrahl sowie die Eintrittsöffnung für den reflektierten Strahl aufweisende Messkopf auf dem verschiebbaren und kardanisch beweglichen Messschlitten angeordnet werden, wodurch die relativ grossvolumige und empfindliche Schwingungsaufnahmeeinrichtung wiederum feststehend an relativ beliebiger Stelle in der Umgebung der zu prüfenden Brennkraftmaschine angeordnet sein kann. Bei dieser Anordnung ist wegen der naturgemäss stets gleichbleibenden Länge des flexiblen Lichtleiters auch eine Kompensation der verschiedenen Abstände zur zu vermessenden Stelle an der Brennkraftmaschine überflüssig, sofern der Abstand des Messkopfes zu den Messstellen gleich ist.

Schliesslich kann nach einem weiteren Merkmal der Erfindung der Strahlengang bis knapp oberhalb der zu vermessenden Oberfläche abgedeckt sein, was die Sicherheit beispielsweise für das Bedienungspersonal erhöht. Obwohl die üblicherweise für derartige Anwendungen verwendeten Laser lediglich eine Leistung im Bereich einiger Milliwatt aufweisen und für den Menschen ungefährlich sind, könnte es beim direkten Eintreten des Laserstrahles in die Pupille des Auges zu einer Netzhautschädigung kommen, was durch die genannte Abdeckung sicher vermieden ist.

Die Erfindung wird im folgenden anhand der in der Zeichnung dargestellten Ausführungsbeispiele näher erläutert.

Figur 1 zeigt eine erfindungsgemässe Einrichtung in schematischer Darstellung,
Figur 2 eine Schwingungsaufnahmeeinrichtung zur Verwendung in einer erfindungsgemässen Einrichtung ebenfalls in schematischer Darstellung,
Figur 3 ein Frequenz-Zeit/Diagramm, erhalten mit der Schwingungsaufnahmeeinrichtung nach Fig. 2,

Figur 4 ein Detail aus der Anordnung einer Schwingungsaufnahmeeinrichtung eines anderen Ausführungsbeispieles nach der Erfindung und

Figur 5 ein weiteres Ausführungsbeispiel in teilweise schematischer Darstellung.

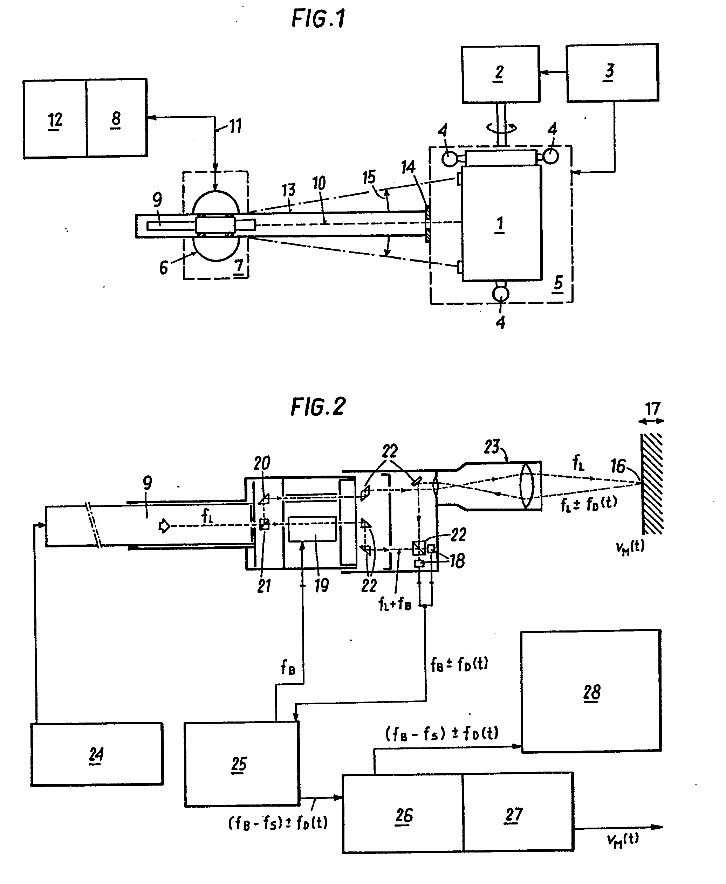

In Fig. 1 ist eine Einrichtung zur Prüfung einer Brennkraftmaschine 1 auf sich in einer Änderung des Vibrationsverhaltens ausdrückende Fehler- bzw. Betriebsstörungen dargestellt, wobei die Brennkraftmaschine 1 zum Zwecke dieser Prüfung über einen Antrieb 2, beispielsweise einen geeigneten Elektromotor, fremdangetrieben ist. Mit 3 ist eine Steuerungs- bzw. Bedienungseinheit bezeichnet, welche mit dem Antrieb 2 und der Brennkraftmaschine 1 in Verbindung steht und diese regelt bzw. überwacht.

An einer Längsseite der an drei Auflagern 4 auf einer Palette 5 gelagerten Brennkraftmaschine 1 ist zur Messung von Oberflächenvibrationen an der Brennkraftmaschine eine Schwingungsaufnahmeeinrichtung 6 auf einer Verstelleinrichtung 7 angeordnet, welche mit einer Steuereinheit 8 zusammenwirkt.

Die Schwingungsaufnahmeeinrichtung 6 weist einen Laser 9 auf, dessen Strahl 10 auf die zu vermessenden Stellen der Oberfläche der Brennkraftmaschine 1 richtbar ist. Weiters ist in der Schwingungsaufnahmeeinrichtung ein in Fig. 1 nicht näher dargestellter Empfänger für die von der Brennkraftmaschine reflektierte Strahlung vorgesehen. Über eine Versorgungs- und Auswerteleitung 11 steht die Schwingungsaufnahmeeinrichtung 6 bzw. die Verstelleinrichtung 7 mit der Steuereinheit 8 in Verbindung, welche im dargestellten Ausführungsbeispiel mit einer Auswerteeinheit 12 gekoppelt ist. Die Auswerteeinheit 12 weist eine hier nicht näher dargestellte Demodulationseinrichtung auf, mittels der aus der von der zu vermessenden Stelle reflektierten Laserstrahlung der Einfluss von Vibrationen der reflektierenden Oberfläche ausgefiltert und als Messignal weiterverarbeitet wird. Die Steuereinheit 8 bzw. die Verstelleinrichtung 7 dienen dabei dazu, den Laser 9 sowie den Empfänger für die reflektierte Strahlung auf die jeweils zu vermessende Stelle der Oberfläche der Brennkraftmaschine 1 auszurichten. Der Schwenkbereich für den bis knapp oberhalb der zu vermessenden Oberfläche an der Brennkraftmaschine 1 in einem Rohr 13 abgedeckt verlaufenden Laserstrahl 10, der durch eine beispielsweise nur zur eigentlichen Messung öffenbare Lochblende 14 aus- bzw. als reflektierter Strahl wieder eintritt, ist mit Pfeilen 15 angedeutet.

Die in Fig. 2 näher dargestellte Schwingungsaufnahmeeinrichtung (6 in Fig. 1) weist im wesentlichen einen Laser 9, dessen Strahl auf eine Stelle 16 der in Richtung des Pfeiles 17 schwingenden Oberfläche der hier nicht weiter dargestellten Brennkraftmaschine 1 richtbar ist, sowie je einen Empfänger 18 für die ausgesandte sowie die von der zu vermessenden Oberfläche reflektierte Strahlung auf. Mit 19 ist eine sogenannte Bragg-Zelle bezeichnet, die dem ausgesandten und über Prismen 20, 21 bereits aufgeteilten bzw. umgelenkten Laserstrahl eine Frequenz $f_B$ aufmoduliert und in Aufbau und Funktion zum Stand der Technik gehört. Abgesehen von weiteren Ablenk- bzw. Umlenkeinrichtungen 22, welche zur Zuführung eines Teiles des ausgesandten Laserstrahles bzw. des von der zu vermessenden Oberfläche reflektierten Strahles zu den Empfängern 18 dienen, ist noch eine Optik 23 vorgesehen, welche auf hier nicht dargestellte Weise – beispielsweise über die Steuereinheit 8 in Fig. 1 – auf die jeweils gegebene Entfernung bis zur Stelle 16 an der zu vermessenden Oberfläche einstellbar ist.

Mit 24 ist in Fig. 2 der Versorgungsteil für den Laser 9 – beispielsweise ein Helium/Neon-Laser – mit 25 ein Frequenzshifter, mit 26 ein Frequenztracker, mit 27 ein Frequenz-Spannungs-Konverter und mit 28 ein Kontrolloszilloskop bezeichnet.

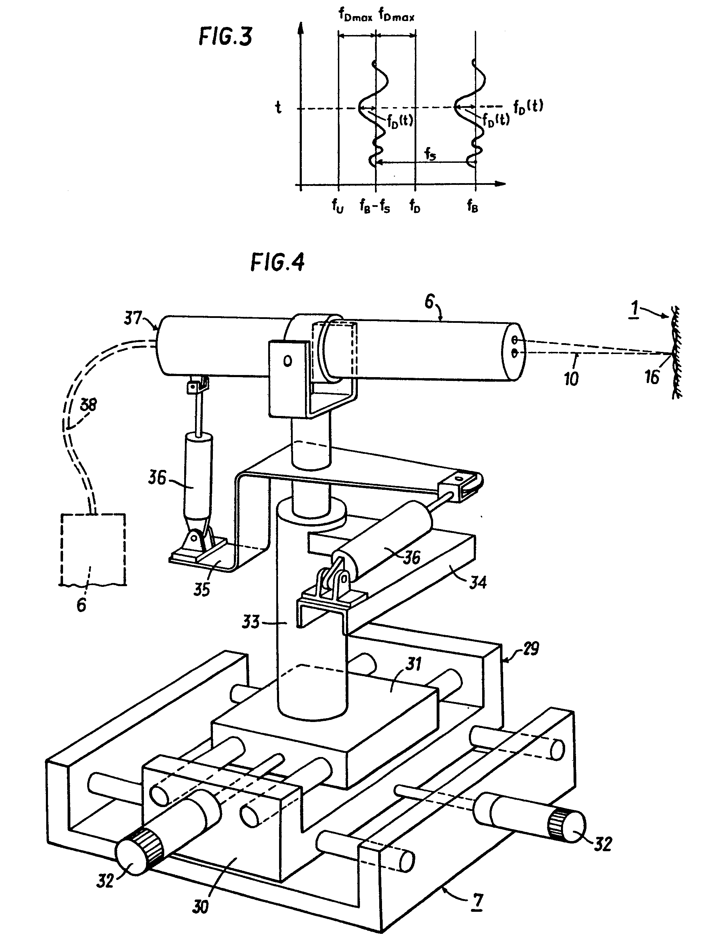

Die Funktion der in Fig. 2 dargestellten Schwingungsaufnahmeeinrichtung lässt sich unter Hinweis auf das in Fig. 3 dargestellte Frequenz f/Zeit t-Diagramm kurz wie folgt erklären:

Die Funktion der dargestellten Einrichtung beruht im Prinzip auf der Auswertung der Doppler-Frequenzverschiebung bei Reflexion des ausgesandten Laserstrahles an einer bewegten Oberfläche. Die Verschiebungsfrequenz ist dabei direkt proportional dem zeitlichen Verlauf der Schwingschnelle der zu vermessenden Oberfläche. Prinzipiell wäre dazu bereits die Messung der Frequenz bzw. des Frequenzverlaufes des reflektierten Laserlichtes ausreichend, da durch Vergleich mit der bekannten Frequenz des ausgesandten Lichtes unmittelbar der Einfluss der vibrierenden Oberfläche ermittelbar wäre. Diese theoretische Möglichkeit ist jedoch praktisch mit den heutzutage bekannten elektronischen Komponenten wegen der hohen Frequenzen des ausgesandten Lichtes nicht verwirklichbar. Es wird deshalb in der Bragg-Zelle 19 ein Teil des vom Laser 9 ausgesandten Strahls mit einer Frequenz $f_B$ von beispielsweise 40 MHz moduliert; ebenso wird nachträglich die empfangene Frequenz elektronisch um einen Wert $f_S$ zur Ermöglichung einer optimalen Auswertung des resultierenden Dopplersignals $f_D(t)$ verschoben. Der Frequenztracker 26, der schliesslich zur Messung der Frequenz bzw. Bestimmung des Frequenzverlaufes dient, kann durch die Verschiebung um $f_S$ in einem elektronisch günstigeren tieferen Frequenzbereich arbeiten und muss lediglich in seinen Eckfrequenzen auf die maximal auftretende Dopplerverschiebung entsprechend der grössten zu messenden Schwingschnelle eingestellt werden. Die ermittelte momentane Frequenz wird abschliessend im Konverter 27 in ein der Schwingschnelle an der Stelle 16 der Brennkraftmaschine 1 proportionales Signal konvertiert und als analoger Spannungsverlauf $V_M(t)$ ausgegeben. Dieses Signal entspricht dem Analogsignal eines üblichen mechanischen Beschleunigungsaufnehmers nach dessen Aufbereitung durch einen integrierenden Ladungsverstärker.

Das Kontrolloszilloskop 28 dient lediglich zur optischen Justierung und Kontrolle des Dopplersignals. Mit $f_L$ ist die ursprüngliche Frequenz des Lasers 9 bezeichnet; $f_U$ und $f_O$ (Fig. 3) kennzeichnen die genannten Eckfrequenzen des Frequenztrackers 26.

In Fig. 4 ist die verschiebliche Lagerung und kardanische Aufhängung einer Schwingungsaufnahmeeinrichtung 6, welche beispielsweise wie in Fig. 2 dargestellt aufgebaut sein kann, gezeigt. Die Schwingungsaufnahmeeinrichtung 6 ist dabei auf einem relativ zur zu vermessenden Oberfläche der Brennkraftmaschine 1 verschiebbaren Messschlitten 29 angeordnet, der im dargestellten Ausführungsbeispiel über Führungsteile 30, 31 sowie auf diese einwirkende Verstellelemente 32 eine Bewegung einer Tragsäule 33 in zwei zueinander senkrecht stehenden Richtungen erlaubt. Auf der Tragsäule 33 sind Winkel 34, 35 angebracht, welche über weitere Verstellelemente 36 eine Verdrehung bzw. Verschwenkung der Schwingungsaufnahmeeinrichtung 6 ermöglichen. Die Verstellelemente 32 bzw. 36 sind auf hier nicht dargestellte Weise mit der Steuereinheit (8 in Fig. 1) in Verbindung, wodurch eine kontrollierte Ausrichtung des Laserstrahles 10 auf eine bestimmte Stelle 16 an der Oberfläche der Brennkraftmaschine 1 möglich ist.

Ebenfalls in Fig. 4 ist strichliert eingezeichnet eine weitere Möglichkeit zur Sicherstellung eines auf bestimmte gewählte Stellen der Oberfläche der Brennkraftmaschine ausrichtbaren Laserstrahles. Es ist dabei die Schwingungsaufnahmeeinrichtung 6 feststehend irgendwo in der Nähe des Messschlittens 29 angeordnet, wobei auf dem Messschlitten selbst dann nur mehr ein Messkopf 37 (dieser wäre in den Dimensionen natürlich entsprechend kleiner ausführbar) angeordnet, der ebenso (wie oben besprochen die gesamte Schwingungsaufnahmeeinrichtung 6) verschiebbar und verschwenkbar ist. Die den Laser aufweisende Schwingungsaufnahmeeinrichtung wäre in diesem zweiten Falle über einen flexiblen Lichtleiter 38 mit dem Messkopf 37 verbunden, wobei über diesen Lichtleiter 38 auch das reflektierte Laserlicht zum Empfänger in der Schwingungsaufnahmeeinrichtung 6 rückgeführt würde.

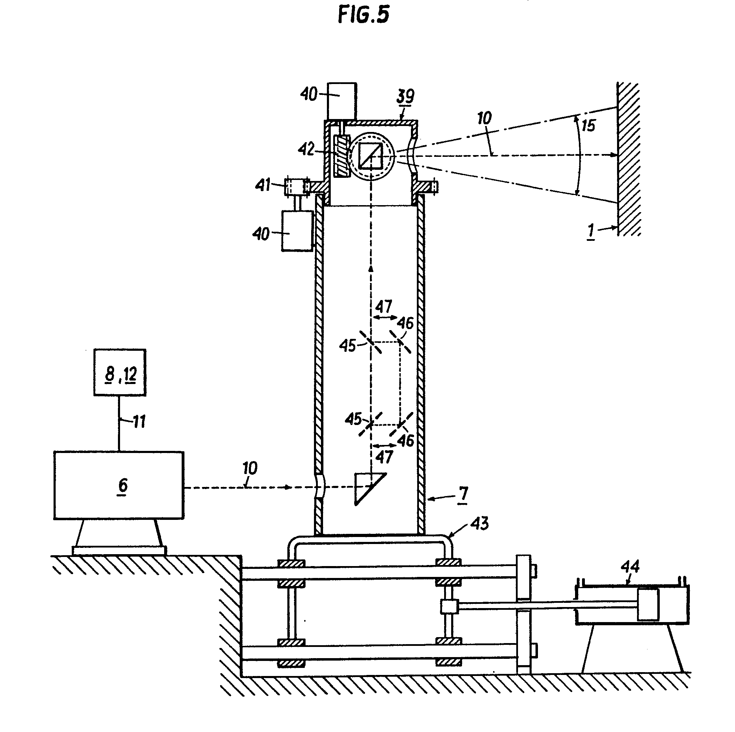

Bei der in Fig. 5 dargestellten Ausbildung ist die Schwingungsaufnahmeeinrichtung 6, welche wiederum beispielsweise wie in Fig. 2 dargestellt aufgebaut sein kann, ebenfalls relativ zur zu vermessenden Oberfläche der Brennkraftmaschine 1 feststehend ausgebildet und über eine Versorgungs- und Auswerteleitung 11 mit der Steuer- und Auswerteeinheit 8, 12 verbunden. Um den Laserstrahl 10 auf verschiedene Stellen der Oberfläche der Brennkraftmaschine 1 ausrichten zu können, ist in diesem Falle im Strahlengang der ausgesandten sowie der reflektierten Strahlung eine Ablenkeinrichtung 39 angeordnet, welche ein über Elektromotoren 40 und Zahnräder 41 bzw. Schneckenräder 42 verdrehbares Ablenkprisma aufweist. Die Elektromotoren 40 sind dabei in nicht dargestellter Weise mit der Steuereinheit 8 verbunden. Zusätzlich zur Ermöglichung der winkelmässigen Ablenkung des Laserstrahles 10 über die Ablenkeinrichtung 39 ist bei der Anordnung nach Fig. 5 auch ein Stellschlitten 43 vorgesehen, der beispielsweise über eine hydraulische Verstelleinrichtung 44 verschiebbar ist.

Um die Länge des Strahlenganges für den Laserstrahl 10 nach dem Verlassen des Lasers bzw. der Schwingungsaufnahmeeinrichtung 6 bei für die verschiedenen zu vermessenden Stellen der Oberfläche der Brennkraftmaschine verschiedenen Entfernungen zur zu vermessenden Oberfläche verstellbar zu machen, kann die Anordnung nach Fig. 5, beispielsweise wie strichliert angedeutet, ergänzt sein; über zwei Umlenkeinrichtungen 45, 46, von denen die eine (46) in Richtung des Pfeiles 47 verschiebbar ist, kann der vom Laserstrahl 10 zurückzulegende Weg unabhängig von der feststehenden Anordnung sowohl der Brennkraftmaschine 1 als auch der Schwingungsaufnahmeeinrichtung 6 in gewissen Grenzen variiert werden. Die im Strahlengang angeordneten und als Kompensationsglieder wirkenden Umlenkeinrichtungen 45, 46 sind dabei auf hier nicht dargestellte Weise über mit der Steuereinheit 8 in Verbindung stehende Stellglieder betätigbar.

In diesem Zusammenhang wäre noch zu erwähnen, dass in der Auswerteeinheit 12 (Fig. 1) auch zusätzlich noch eine an sich bekannte, den ausgesandten und den empfangenen Laserstrahl verwendende Entfernungsmesseinrichtung für die bis zur zu vermessenden Oberfläche zurückzulegende Strecke vorgesehen sein könnte, welche beispielsweise die in Fig. 2 dargestellte Optik 23 über eine nicht dargestellte Servo-Einrichtung verstellen könnte, womit ebenfalls eine genaue Berücksichtigung von fallweise unterschiedlichen Entfernungen zur vermessenden Oberfläche möglich wäre.

**Patentansprüche**

1. Einrichtung zur Prüfung auf sich in einer Änderung des Vibrationsverhaltens ausdrückende Fehler und Betriebsstörungen, mit einer zumindest teilweise fertig montierten und zum Zwecke dieser Prüfung fremdangetriebenen Brennkraftmaschine (1), einer Schwingungsaufnahmeeinrichtung (6), sowie einer damit in Verbindung stehenden Auswerteeinheit (12), dadurch gekennzeichnet, dass zur Messung von Oberflächenvibrationen die Schwingungsaufnahmeeinrichtung (6) zumindest einen Laser (9), dessen Strahl (10) auf die zu vermessenden Stellen (16) der Oberfläche der Brennkraftmaschine (1) richtbar ist, sowie einen Empfänger (18) für die von der Brennkraftmaschine (1) reflektierte Strahlung aufweist, und in der Auswerteeinheit (12) eine Demodulationseinrichtung vorgesehen ist, welche aus der von der zu vermessenden Stelle reflektierten Laserstrahlung den Einfluss von Vibrationen der reflektierenden Oberfläche ausfiltert und als Messignal weiterverarbeitet, und dass eine mit einer Verstelleinrichtung (7) zusammenwirkende Steuereinheit (8) vorgesehen ist, welche Laser (9) und Empfänger (18) auf die jeweils zu vermessende Stelle (16) der Oberfläche der Brennkraftmaschine (1) ausrichtet.

2. Einrichtung nach Anspruch 1, dadurch gekennzeichnet, dass die Schwingungsaufnahmeeinrichtung (6) auf einem relativ zur zu vermessenden Oberfläche verschiebbaren Messschlitten (29) kardanisch beweglich gelagert ist, und dass am Messschlitten (29) Verstellelemente (32, 36) vorgesehen sind, welche mit der Steuereinheit (8) in Verbindung stehen.

3. Einrichtung nach Anspruch 1, dadurch gekennzeichnet, dass sowohl Laser (9) als auch Empfänger (18) relativ zur zu vermessenden Oberfläche feststehend angeordnet sind und dass im Strahlengang der ausgesandten sowie der reflektierten Strahlung Ablenkeinrichtungen (39) angeordnet sind, welche über mit der Steuereinrichtung (8) in Verbindung stehende Verstelleinrichtungen (40, 41, 42) verschwenkbar sind.

4. Einrichtung nach Anspruch 3, dadurch gekennzeichnet, dass die Länge des Strahlenganges bei für die verschiedenen zu vermessenden Stellen (16) der Oberfläche der Brennkraftmaschine (1) verschiedenen Entfernungen zwischen Laser (9) bzw. Empfänger (18) und zu vermessender Oberfläche über im Strahlengang angeordnete Kompensationsglieder (45, 46) verstellbar ist, wobei die Kompensationsglieder über mit der Steuereinheit in Verbindung stehende Stellglieder betätigbar sind.

5. Einrichtung nach einem der Ansprüche 1 bis 3, dadurch gekennzeichnet, dass in der Auswerteinheit eine an sich bekannte, den ausgesandten und den empfangenen Laserstrahl verwendende Entfernungsmesseinrichtung für die bis zur vermessenden Oberfläche zurückzulegende Strecke vorgesehen ist, welche mit einer Servo-Einrichtung zur Verstellung eines Objektives für den Laserstrahl in Verbindung steht.

6. Einrichtung nach Anspruch 1, dadurch gekennzeichnet, dass ein Messkopf (37) vorgesehen ist, der auf einem relativ zur zu vermessenden Oberfläche verschiebbaren Messschlitten (29) kardanisch beweglich gelagert ist, dass am Messschlitten (29) Verstellelemente (32, 36) vorgesehen sind, welche mit der Steuereinheit (8) in Verbindung stehen, und dass der Messkopf (37) über zumindest einen flexiblen Lichtleiter (38) mit dem feststehend angeordneten Laser und Empfänger in Verbindung steht.

7. Einrichtung nach einem der Ansprüche 1 bis 6, dadurch gekennzeichnet, dass der Strahlengang bis knapp oberhalb der zu vermessenden Oberfläche abgedeckt ist.

## Claims

1. A device for the detection of faults and operating troubles accompanied by a change in vibration behaviour, comprising an internal combustion engine (1) which is at least partially assembled and is driven externally for testing purposes, a vibration detector (6) and an evaluation unit (12) connected thereto, wherein, for the purpose of measuring surface vibrations, said vibration detector (6) is provided with one or more lasers (9) whose beam (s) (10) can be directed at the spots (16) to be measured on the surface of the internal combustion engine (1), and is further provided with a receiver (18) for the radiation reflected from said engine (1), and wherein said evaluation unit (12) includes a demodulation unit, which will separate and process as a test signal the effect of vibrations of the reflecting surface on the laser radiation reflected from the spot to be measured, and wherein is provided a control unit (8) cooperating with an adjusting device (7), which control unit (8) will direct laser (9) and receiver (18) at the particular spot (16) to be measured on the surface of the internal combustion engine (1).

2. A device according to claim 1, wherein the vibration detector (6) is gimbal-mounted on a carriage (29) sliding relative to the surface to be measured, and wherein said carriage (29) has adjusted elements (32, 36) which are connected to the control unit (8).

3. A device according to claim 1, wherein both the laser (9) and the receiver (18) are stationary relative to the surface to be measured, and wherein deflection devices (39) are placed in the radiation paths of both emitted and reflected radiation, which devices are tiltable by means of adjusting elements (40, 41, 42) which in turn are connected to the control unit (8).

4. A device according to claim 3, wherein the length of the radiation path can be adjusted by means of compensating elements (45, 46) placed in the radiation path, in accordance with the varying distances between laser (9), or rather receiver (18), and the surface to be measured – which distances will vary with the different spots (16) to be measured on the surface of the internal combustion engine (1) – said compensating elements (45, 46) being actuated by control unit.

5. A device according to any of claims 1 to 3, wherein the evaluation unit includes a known type of distance measuring device measuring the distance to be travelled until the surface to be measured is reached, with the use of the laser beams emitted and received, which device is connected to a servo unit for adjusting an objective lens for the laser beam.

6. A device according to claim 1, wherein is provided a measuring head (37) which is gimbal-mounted on a carriage (29) sliding relative to the surface to be measured, and wherein said carriage (29) is furnished with adjusting elements (32, 36) which are connected to the control unit (8), and wherein said measuring head (37) is connected to the stationary laser and receiver via one or more flexible fiber-optical waveguides (38).

7. A device according to any of claims 1 to 6, wherein the radiation path is provided with a cover ending just above the surface to be measured.

## Revendications

1. Installation pour contrôler les erreurs ou les incidents de fonctionnement qui se traduisent par une modification du comportement aux vibrations, comprenant un moteur à combustion interne (1) dont le montage est au moins en partie terminé et qui est entraîné de l'extérieur pour ce contrôle, pour trouver une installation de détection d'oscillations (6) ainsi qu'une unité d'exploitation (12) reliée à celle-ci, caractérisée en ce que pour mesurer les vibrations de surface, l'installation de détection des oscillations (6) comprend au moins un laser (9) dont le faisceau (10) est susceptible d'être dirigé sur les zones (16) à mesurer de la surface extérieure du moteur à combustion interne (1) ainsi qu'un récepteur (18) pour le rayonnement réfléchi par le moteur à combustion interne (1), et en ce que l'unité d'exploitation (12) comporte une installation de démodulation qui sépare par filtration l'influence des vibrations de la surface extérieure réfléchissante du rayonnement laser réfléchi par la zone à mesurer, et continue le traitement comme signal de mesure et en ce qu'il est prévu une unité de commande (8) coopérant avec l'installation de réglage (7), qui aligne le laser (9) et le récepteur (18) vers la zone (16) respective, à mesurer de la surface extérieure du moteur à combustion interne (1).

2. Installation selon la revendication 1, caractérisée en ce que l'installation de détection d'oscillations (6) est montée mobile par cardan sur un chariot de mesure (29) coulissant par rapport à la surface extérieure à mesurer, et en ce que des éléments de réglage (32, 36) sont prévus sur le chariot de mesure (29), éléments qui coopèrent avec l'unité de commande (8).

3. Installation selon la revendication 1, caractérisée en ce qu'à la fois le laser (9) et le récepteur (18) sont montés fixes par rapport à la surface extérieure à mesurer et en ce que dans le chemin du rayonnement pour le rayonnement émis et le rayonnement réfléchi, se trouvent les installations de déflexion (39) qui peuvent être basculées par l'installation de commande (8) en liaison avec les installations de réglage (40, 41, 42).

4. Installation selon la revendication 3, caractérisée en ce que la longueur du chemin du rayonnement pour les différentes zones à mesurer (16) à la surface extérieure du moteur à combustion interne (1) des différents éloignements entre le laser (9) ou le récepteur (18) et la surface extérieure à mesurer est réglable par des organes de compensation (45, 46) prévus dans le chemin du rayonnement les organes de compensation pouvant être manœuvrés par des organes de réglage combinés à l'unité de commande.

5. Installation selon l'une des revendications 1 à 3, caractérisée en ce que l'unité d'exploitation comporte une installation de télémétrie connue en soi, utilisant le faisceau laser émis et le faisceau laser reçu pour le chemin à parcourir jusqu'à la surface extérieure à mesurer, et qui coopère avec une installation d'asservissement pour le réglage d'un objectif pour le faisceau laser.

6. Installation selon la revendication 1, caractérisée en ce qu'elle comporte une tête de mesure (37) qui est montée mobile par un cardan sur le chariot de mesure (29) mobile en translation par rapport à la surface extérieure à mesurer, en ce que des éléments de réglage (32, 36) sont prévus sur le chariot de mesure (29), éléments qui sont liés à l'unité de commande (8) et en ce que la tête de mesure (37) est reliée par au moins un conducteur optique (38), souple au laser et au récepteur montés fixes.

7. Installation selon l'une des revendications 1 à 6, caractérisée en ce que le chemin du rayonnement est couvert jusque pratiquement au-dessus de la surface extérieure à mesurer.

# FIG.1

# FIG.2

$f_L$

$f_L$

$f_L \pm f_D(t)$

$v_M(t)$

$f_L + f_B$

$f_B$

$f_B \pm f_D(t)$

$(f_B - f_S) \pm f_D(t)$

$(f_B - f_S) \pm f_D(t)$

$v_M(t)$

FIG.3

FIG.4

3/3

# FIG.5